# EUROPÄISCHE PATENTANMELDUNG

(11) **EP 1 983 019 A2**
(43) Veröffentlichungstag der Anmeldung: **22.10.2008**
(21) Anmeldenummer: 08100341.0
(22) Anmeldetag: 11.01.2008
(51) Int. Cl.: C08G 77/50, C04B 41/49

(54) **Organisch modifizierte Siloxane und deren Verwendung zur Herstellung von Zubereitungen für wasserabweisende Imprägnierungen**

(30) Priorität: 08.03.2007 DE 102007011251
(71) Anmelder: Evonik Goldschmidt GmbH, 45127 Essen (DE)
(72) Erfinder: Herrwerth, Sascha, 45134, Essen (DE); Koenig, Frank, 45884, Gelsenkirchen (DE); Lohse, Andrea, 46236, Bottrop (DE)

(57) **Zusammenfassung**

Gegenstand der Erfindung sind organomodifizierte Siloxanverbindungen der allgemeinen Formel (I) 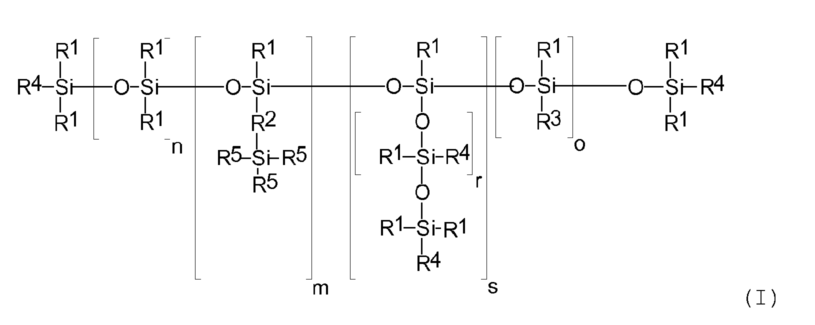 die Verwendung mindestens einer dieser Verbindungen zur Herstellung von wässrigen Zubereitungen zur wasserabweisenden Imprägnierung organischer oder anorganischer Materialien.

## Beschreibung

Die Erfindung betrifft neuartige organisch modifizierte Siloxane und deren Verwendung zur Herstellung von Zubereitungen für wasserabweisende Imprägnierungen, z. B. für mineralische Baustoffe auf der Basis organomodifizierter Siloxanverbindungen, die gleichzeitig an Si-Atomen gebundene Carbonsäureester-funktionelle organische Reste und Alkoxygruppen im Molekül enthalten.

Seit vielen Jahren werden Organosilane oder Organosiloxane zur Imprägnierung poröser mineralischer Baustoffe eingesetzt, um diese vor dem Eindringen von Wasser zu schützen. Bei dieser hydrophobierenden Behandlung ist es besonders wichtig, dass die Wirkstoffe tief in den Baustoff eindringen und sich mit dem Baustoff chemisch oder physikalisch verbinden.

Die Penetration in den Baustoff wird begünstigt, wenn als siliciumorganische Wirkstoffe möglichst niedermolekulare Verbindungen verwendet werden. Die Eindringtiefe kann zusätzlich durch die Mitverwendung organischer Lösungsmittel verbessert werden, die nach der Behandlung des Baustoffs verdunsten.

Hohe Reaktivität wird erreicht, wenn als siliziumorganische Verbindungen Organoalkoxysilane und/oder Organoalkoxysiloxane eingesetzt werden, die unter Einfluss von Feuchtigkeit kondensieren und mit dem Baustoff reagieren können. Dabei wird der Alkoxygruppe entsprechender Alkohol abgespalten, welcher in die Atmosphäre verdunstet.

Aus der US 4,486,476 ist eine solche Zubereitung aus Organoalkoxysilanen bekannt, die Siloxaneinheiten der allgemeinen Formel 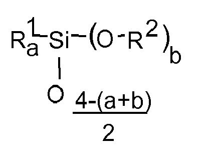 aufweist, wobei
- R¹: ein Alkyl- oder Arylrest,
- R²: ein Alkylrest mit 1 bis 4 Kohlenstoffatomen,
- a: 0,8 bis 1, 5 und
- b: ≤ 2,
ist.

Diese Zubereitung ist dadurch gekennzeichnet, dass sie aus
a) 1 bis 20 Massen-% eines Gemisches von Organoalkoxysiloxanen die Siloxaneinheiten der vorgenannten Formel aufweisen, welches aus 25 bis 75 Massen-% eines Siloxans, dessen Wert b = 0,1 bis 0,5 und 75 bis 25 Massen-% eines Siloxans, dessen Wert b = 0,8 bis 2,0 ist, besteht und wobei a + b ≤ 3 ist,
b) 80 bis 99 Massen-% eines nicht mit Wasser mischbaren Lösungsmittels und
c) gegebenenfalls aus an sich bekannten Kondensationskatalysatoren,
besteht.

Das wesentliche Merkmal dieser Zubereitung besteht somit darin, die Imprägnierung nicht mit einem Organoalkoxysiloxan durchzuführen, dessen Molekulargewichtsverteilung im Wesentlichen nur ein einziges Maximum aufweist, sondern ein Gemisch von Organoalkoxysiloxanen zu verwenden, das durch einen unterschiedlichen Kondensationsgrad gekennzeichnet ist.

Hierdurch wird eine hohe Eindringtiefe, verbunden mit hoher Wirksamkeit, insbesondere auf alkalischen Baustoffen und ein guter optisch sichtbarer Wasserabperleffekt, gewährleistet.

Eine Verbesserung dieser Zubereitungen ist im Wesentlichen nur hinsichtlich der in der Praxis erreichbaren Eindringtiefe möglich. Die Eindringtiefe wird im Wesentlichen von drei Faktoren beeinflusst, nämlich den verwendeten Lösungsmitteln, der Porosität der Baustoffe und der Sorgfalt, mit der die Anwendung dieser Zubereitungen in der Praxis erfolgt. Verbesserte Zubereitungen zur Imprägnierung müssen daher insbesondere an ihrem Penetrationsverhalten gemessen werden.

Infolge des gestiegenen Umweltbewusstseins wird die Verwendung organischer Lösungsmittel zunehmend als störend empfunden. Man hat sich deshalb insbesondere bemüht, vergleichbare Zubereitungen auf wässriger Basis zu entwickeln.

Weitere Entwicklungsarbeiten haben zu einem Verfahren geführt, das Gegenstand der US 4,781,950 ist. Diese Patentschrift betrifft ein Verfahren zum Imprägnieren von mineralischen Baustoffen, insbesondere Mauerwerk, mit wässrigen Lösungen von Silanolen und/oder Siloxanolen, die am Ort ihrer Verwendung durch Hydrolyse von Alkoxysilanen und/oder Alkoxysiloxanen hergestellt werden, wobei man als Alkoxysilane und/oder Alkoxysiloxane Verbindungen auswählt, die Siloxaneinheiten der allgemeinen Formel 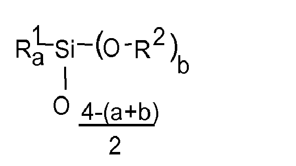 aufweisen, mit
- R¹: Alkylrest mit 1 bis 8 Kohlenstoffatomen, wobei im Mittel mindestens 90 % der Reste R¹ Alkylreste mit 1 bis 4 Kohlenstoffatomen sind,
- R²: Methyl- oder Ethylrest,
- a: 0 bis 1,5,
- b: 1,0 bis 4,0,
- a+b: 2,0 bis 4,0,
diese kontinuierlich in einer dem Verbrauch entsprechenden Menge hydrolysiert und die erhaltene Lösung innerhalb einer Zeitspanne von 3 bis 30 Minuten nach Vermischen der Reaktionspartner auf den mineralischen Baustoff aufbringt.

Bei dieser Verfahrensweise wird eine hohe Penetration der wässrigen Zubereitungen in den mineralischen Baustoff erzielt, die mit der Penetration vergleichbar ist, die man bei der Verwendung lösungsmittelhaltiger Zubereitungen erreicht.

Diese wässrigen Lösungen müssen jedoch, wie in der DE-C-36 27 060 gefordert, aufgrund ihrer Lagerinstabilität am Ort ihrer Verwendung hergestellt werden. In der europäischen Patentanmeldung EP-A-0 234 024 wird für die Zwecke der Hydrophobierung keramischen Materials eine wässrige Silanemulsion beschrieben, welche im Wesentlichen aus
a) 1 bis 40 Massen-% eines hydrolysierbaren Silans mit einem Molekulargewicht bis zu etwa 500 und der allgemeinen Formel RₙSi(R')_{4-n,} wobei R ein gegebenenfalls halogenierter Kohlenwasserstoffrest mit 1 bis 20 C-Atomen, R' ein Alkoxyrest mit 1 bis 3 C-Atomen, ein Halogen-, Amino- oder Carboxylrest, n = 1 oder 2 ist, oder Oligomere dieser Silane und
b) 0,5 bis 50 Massen-%, bezogen auf das Silan, eines Emulgators mit einem HLB-Wert nach Griffin (Hydrophilie-Lipophilie-Balance-Wert) von 4 bis 15 und
c) Wasser,
besteht.

Als besonders bevorzugtes Silan wird Octyltriethoxysilan genannt. Tatsächlich weisen Emulsionen derartiger Silane, bei denen der Rest R mehr als 6 Kohlenstoffatome aufweist, erhöhte Stabilität auf, da die Hydrolysegeschwindigkeit dieser reaktiven Silane herabgesetzt ist.

Nachteilig ist jedoch, dass zwangsläufig auch die Hydrolyse dieser Silane im Baustoff entsprechend langsam erfolgt und in geeigneter Weise katalysiert werden muss. In einigen Baustoffen, wie frischem Beton, ist dies durch deren hohe Alkalität möglich. In neutralen oder schwach alkalischen Baustoffen, wie gebranntem Klinker und zahlreichen Natursteinen, ist dies jedoch nicht möglich. Ohne eine solche Katalyse erfolgt jedoch keine Verankerung der Silane an der Oberfläche des Baustoffs. Die Silane können von der Oberfläche verdunsten oder mechanisch entfernt werden. Dies führt zu einer Verarmung der Oberfläche an Silanen und damit zu einer Verminderung der Hydrophobierung. Dies hat zur Folge, dass der Wasserabperleffekt schwach oder gar nicht vorhanden ist. Das Wasseraufnahmevermögen in der verarmten Oberflächenschicht ist hoch, so dass gerade diese, der Witterung und dem mechanischen Angriff besonders ausgesetzte Schicht, unzureichend geschützt ist. Diese Zubereitungen können somit nur bei bestimmten Baustoffen eingesetzt werden.

Eine Imprägnieremulsion mit guter Wirkung auf alkalischen und neutralen Baustoffen ist in der US 5,091,002 beschrieben. Sie enthält 2,5 bis 25 Massen-% eines Alkoxysilans der allgemeinen Formel

R¹-Si (OR²)₃

wobei
- R¹: ein Alkylrest mit 3 bis 12 Kohlenstoffatomen und
- R²: ein Methyl- oder Ethylrest ist,
2 bis 20 Massen-% eines Alkoxysiloxans, das Siloxaneinheiten der allgemeinen Formel 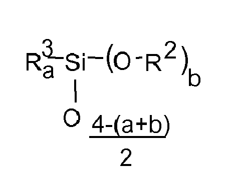 aufweist, wobei
- R³: ein Alkylrest mit 1 bis 6 Kohlenstoffatomen,
- a: 0,8 bis 1,2 und
- b: 0,2 bis 1,2, ist
0,01 bis 5 Massen-% eines Emulgators,
0,01 bis 0,1 Massen-% Füllstoffe mit einer wirksamen Oberfläche von mindestens 40 m²/g und
49,9 bis 95,48 Massen-% Wasser.

Diese Imprägnieremulsion weist im Allgemeinen gute Abperleffekte sowohl auf alkalischen wie auf neutralen mineralischen Substraten auf. Benotet man die mit dieser Emulsion erzielbaren Effekte nach dem weiter unten gegebenen Bewertungsschema, zeigt sich, dass die besten Ergebnisse erzielt werden, wenn
a) der Emulgatorgehalt niedrig ist,
b) in der Emulsion hydrophobierte Kieselsäure und
c) ein Härtungskatalysator für die siliciumorganischen Verbindungen
vorhanden ist.

Bei niedrigem Emulgatorgehalt ist aber die Stabilität der Imprägnieremulsion nur begrenzte Zeit gegeben. Ist in der Emulsion hydrophobierte Kieselsäure enthalten, setzt sich diese bei der Lagerung häufig ab und macht ein sorgfältiges Umrühren am Ort der Anwendung, also der Baustelle, notwendig.

Diese Sorgfalt ist nicht immer vorhanden. Der Härtungskatalysator begrenzt schließlich den zeitlichen Verarbeitungsspielraum der Emulsion und kann zur vorzeitigen Aushärtung des Wirkstoffs in der Emulsion bei der Lagerung führen.

Weitere Entwicklungsarbeiten haben zu einem Verfahren geführt, das Gegenstand der DE-A-40 29 640, ist. Diese befasst sich mit dem Problem der Verbesserung der anwendungstechnischen Eigenschaften solcher Imprägnieremulsionen, insbesondere mit dem Problem der Herstellung lagerbeständiger Emulsionen, die zu einem hohen Abperleffekt innerhalb kurzer Zeit, in der Regel innerhalb eines Tages, führen, ohne dass ein Zusatz von hydrophobierter Kieselsäure oder spezieller Härtungskatalysatoren erforderlich ist. Diese Zubereitungen sind Emulsionen, enthaltend Mischungen u. a. aus verschiedenen Siloxanverbindungen, die zur Aushärtung eine Kondensationsreaktion eingehen und dabei leicht flüchtige Alkohole (volatile organische Verbindungen, VOC) in Mengen zwischen 250 und 500 g/l abspalten.

Dies führt zu einem niedrigen Nutzungsgrad des Wirkstoffes und einer erhöhten Belastung der Umwelt. Hinzu kommt, dass bei wässrigen Systemen/Emulsionen, bedingt durch die Alkoholabspaltung, die Lagerstabilität der Systeme eingeschränkt wird, da die Emulsionen durch den freien Alkohol brechen. Dies hat zur Folge, dass die Wirkstoffe kondensieren und somit später bei der Anwendung nicht mehr ausreichend penetrieren.

Infolge des gestiegenen Umweltbewusstseins wird die Verwendung solcher VOC-reicher Formulierungen zunehmend als störend empfunden.

Aufgabe der vorliegenden Erfindung war es deshalb, ein alternatives, den Untergrund hydrophobierendes System bereitzustellen, welches vorzugsweise einen oder mehrere der genannten Nachteile des Standes der Technik nicht aufweist. Bevorzugt sollte das System gut in einen mineralischen oder organischen Baustoff eindringen, einen guten Abperleffekt aufweisen und/oder unabhängig von der Beschaffenheit des Substrats aushärten.

Überraschenderweise wurde gefunden, dass diese Aufgabe durch den Einsatz von organomodifizierten Siloxanverbindungen, die gleichzeitig Carbonsäureester-funktionelle organische Reste und Alkoxygruppen im Molekül enthalten, gelöst werden kann.

Gegenstand der vorliegenden Erfindung sind daher organomodifizierte Siloxanverbindungen der allgemeinen Formel (I), 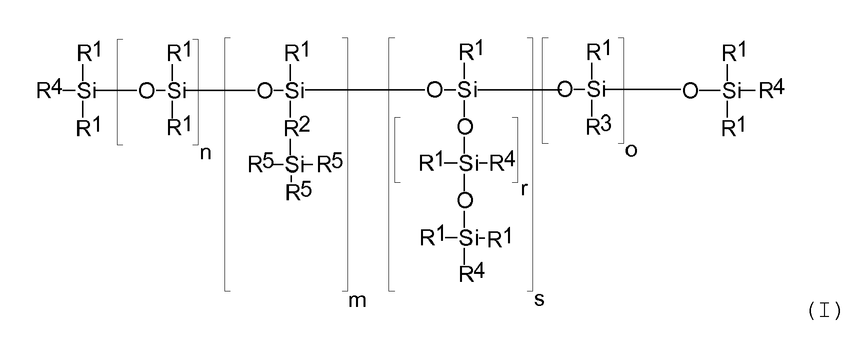 mit
- R¹: gleiche oder verschiedene Reste, ausgewählt aus der Gruppe der linearen oder verzweigten, gesättigten oder ein- bzw. mehrfach ungesättigten Alkyl-, Aryl-, Alkylaryl-, Arylalkylreste oder Halogenalkylgruppen mit 1 bis 20 Kohlenstoffatomen,
- R²: gleiche oder verschiedene organische Reste mit 1 bis 20 C-Atomen, die gegebenenfalls Heteroatome enthalten,
- R³: Carbonsäureester-funktionelle organische Reste wie in der Formel (II) dargestellt, 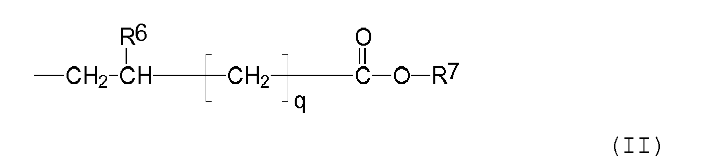 R⁶ gleiche oder verschiedene lineare oder verzweigte, gesättigte oder ein- bzw. mehrfach ungesättigte Alkyl-, Aryl-, Alkylaryl- oder Arylalkylreste mit 1 bis 20 Kohlenstoffatomen
und
R⁷ gleiche oder verschiedene lineare oder verzweigte, gesättigte oder ein- bzw. mehrfach ungesättigte Alkyl-, Aryl-, Alkylaryl- oder Arylalkylreste mit 1 bis 20 Kohlenstoffatomen
und
q 0 bis 11,
- R⁴: unabhängig voneinander R¹, -R²-Si(R⁵)₃, oder R³,
- R⁵: gleiche oder verschiedene gegebenenfalls ungesättigte Alkyl-, Alkoxy-, Aryl- oder Aryloxyreste mit 1 bis 20 Kohlenstoffatomen, mit der Maßgabe, dass R⁵ mindestens einmal eine Alkoxygruppe ist,
- n: 1 bis 200,
- m: 0 bis 20, mit der Maßgabe, dass m nur 0 ist wenn R⁴ der Rest -R²-Si(R⁵)₃ ist und ansonsten m ≥ 1,
- o: 0,2 bis 20,
- r: 0 bis 100,
- s: 0 bis 5,
wobei die mit den Indizes m, n, o, r und s bezeichneten Einheiten in beliebiger Abfolge in den Verbindungen verteilt sein können.

Ein weiterer Gegenstand der Erfindung sind Konzentrate wässriger Emulsionen zur wasserabweisenden Imprägnierung anorganischer und organischer Substrate enthaltend
a) 10 bis 80 Massen-%, vorzugsweise 20 bis 60 Massen-%, insbesondere 30 bis 50 Massen-% der allgemeinen Formel (I),
b) 0,5 bis 10 Massen-% eines Emulgators oder Emulgatorgemisches, vorzugsweise 1,0 bis 5,0 Massen-%, insbesondere 2,0 bis 3,5 Massen-%,
c) 10 bis 89,5 Massen-% Wasser und gegebenenfalls
d) 0 bis 0,5 Massen-% Konservierungsmittel.

Ebenso Gegenstand der vorliegenden Erfindung ist die Verwendung mindestens einer der Verbindungen der Ansprüche 1 bis 8 zur Herstellung von wässrigen Zubereitungen zur wasserabweisenden Imprägnierung anorganischer oder organischer Substrate, insbesondere von porösen mineralischen Baustoffen.

Außerdem sind Gegenstand der vorliegenden Erfindung wässrige Zubereitungen zur wasserabweisenden Imprägnierung anorganischer oder organischer Substrate, enthaltend
a) 10 bis 80 Massen-Teile von Verbindungen gemäß einem der Ansprüche 1 bis 8,
b) 0,5 bis 10 Massen-Teile eines Emulgators oder Emulgatorgemisches und
c) Wasser.

Mögliche weitere Gegenstände der vorliegenden Erfindung ergeben sich aus den Ansprüchen.

Die erfindungsgemäßen Verbindungen haben den Vorteil, dass sie gut in mineralische oder organische Baustoffe eindringen können, so dass bei der Verwendung der erfindungsgemäßen Verbindungen bzw. den daraus hergestellten Emulsionen hohe Eindringtiefen erzielt werden können.

Durch die Verwendung der erfindungsgemäßen Verbindungen bzw. den daraus hergestellten Emulsionen können gute Wasserabperleffekte auf den behandelten Oberflächen erzielt werden.

Werden erfindungsgemäße Verbindungen eingesetzt, die einen geringen durchschnittlichen Anteil an Alkoxy-Gruppen pro Molekül aufweisen, kann außerdem eine reduzierte Freisetzung von flüchtigen organischen Bestandteilen erreicht werden.

Die erfindungsgemäßen Verbindungen und ein Verfahren zu ihrer Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Im Rahmen der vorliegenden Erfindung sollen unter organomodifizierten Siloxanverbindungen der Formel (I) einzelne oder Gemische solcher Verbindungen verstanden werden. Die Angaben zur Anzahl der in den Verbindungen vorhandenen Bausteine, wie z. B. bestimmter Gruppen oder Einheiten sind für den Fall, dass es sich bei den Verbindungen um Gemische von Verbindungen handelt, Durchschnittswerte gemittelt über alle in dem Gemisch enthaltenen Verbindungen. Die mit den Indizes o, m, n, r und s gekennzeichneten Siloxaneinheiten können in den einzelnen Verbindungen zwischen den Endgruppen verteilt, statistisch verteilt, regelmäßig verteilt oder als Blöcke angeordnet sein. Die Gemische können ausschließlich solche Verbindungen aufweisen, in denen die Siloxaneinheiten verteilt, statistisch verteilt, regelmäßig verteilt oder als Blöcke angeordnet sind oder Mischungen von einer oder mehrerer dieser Varianten aufweisen.

Die erfindungsgemäßen organomodifizierten Siloxanverbindungen der allgemeinen Formel (I), 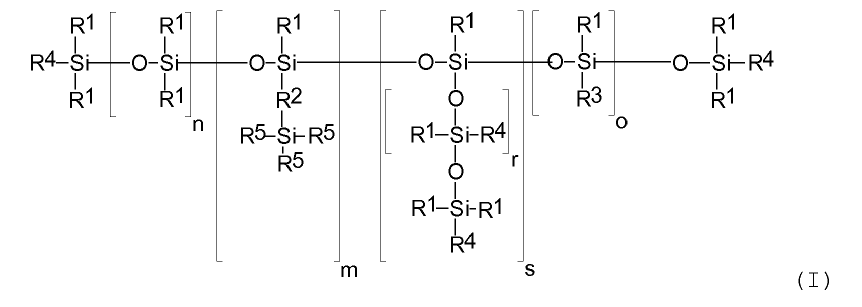 zeichnen sich dadurch aus, dass die Reste und Indizes die Bedeutung
- R¹: gleiche oder verschiedene Reste, ausgewählt aus der Gruppe der linearen oder verzweigten, gesättigten oder ein- bzw. mehrfach ungesättigten Alkyl-, Aryl-, Alkylaryl-, Arylalkyl- oder Halogenalkylgruppen mit 1 bis 20 Kohlenstoffatomen, wobei die Halogenalkylgruppen als Halogenatome vorzugsweise F, Cl und/oder Br, bevorzugt F aufweisen,
- R²: gleiche oder verschiedene, unsubstituierte oder substituierte organische Reste mit 1 bis 20 C-Atomen, vorzugsweise < 10 C-Atomen und bevorzugt 1 bis 5 C-Atome, die gegebenenfalls Heteroatome enthalten, vorzugsweise Sauerstoff und/oder Stickstoffatome (solche Heteroatome können z. B. in Form von Ether-, Ester-, Alkohol-, Amin-, Urethan- oder Amid-Gruppen enthalten sein),
- R³: Carbonsäureester-funktionelle organische Reste wie in der Formel (II) darstellt, 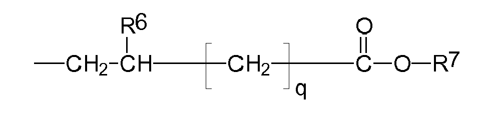 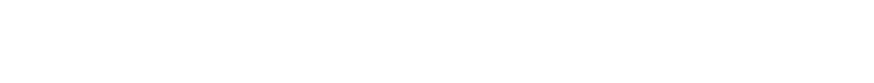 mit
R⁶ gleiche oder verschiedene lineare oder verzweigte, gesättigte oder ein- bzw. mehrfach ungesättigte Alkyl-, Aryl-, Alkylaryl- oder Arylalkylreste mit 1 bis 20 Kohlenstoffatomen und
R⁷ gleiche oder verschiedene lineare oder verzweigte, gesättigte oder ein- bzw. mehrfach ungesättigte Alkyl-, Aryl-, Alkylaryl- oder Arylalkylreste mit 1 bis 20 Kohlenstoffatomen und
q 0 bis 11,
- R⁴: unabhängig voneinander R¹, -R²-Si(R⁵)₃, oder R³,
- R⁵: gleiche oder verschiedene gegebenenfalls ungesättigte Alkyl-, Alkoxy-, Aryl- oder Aryloxyreste mit 1 bis 20 Kohlenstoffatomen, mit der Maßgabe, dass R⁵ mindestens einmal eine Alkoxygruppe ist,
- n: 1 bis 200, vorzugsweise 5 bis 90,
- m: 0 bis 20, mit der Maßgabe, dass m nur 0 ist wenn R⁴ der Rest -R²-Si(R⁵)₃ ist und ansonsten m ≥ 1,
- o: 0,2 bis 20, vorzugsweise 1 bis 10 und bevorzugt ≤ 5,
- r: 0 bis 100, vorzugsweise 3 bis 50 und
- s: 0 bis 5, vorzugsweise 0 bis 1, bevorzugt 0, 0,1, 0,2, 0,3, 0, 4, 0,5, 0,6, 0, 7, 0,8 0,9 oder 1
haben, wobei die mit den Indizes m, n, o, r und s bezeichneten Einheiten in beliebiger Abfolge in den Verbindungen verteilt sein können. Vorzugsweise sind die Reste R² Alkylenreste, die gegebenenfalls Heteroatome aufweisen können und besonders bevorzugt Alkylenreste, die als Heteroatome Sauerstoffatome oder keine Heteroatome aufweisen.

Vorzugsweise sind in den erfindungsgemäßen Siloxanverbindungen im Mittel ≥ 90 % der Reste R¹ Methylgruppen. Die Reste R² sind in den erfindungsgemäßen Siloxanverbindungen vorzugsweise Alkylenreste mit 1 bis 5 C-Atomen. Besonders bevorzugt sind in den erfindungsgemäßen Siloxan-verbindungen im Mittel ≥ 90 % der Reste R¹ Methylgruppen und die Reste R² Alkylenreste mit 1 bis 5 C-Atomen.

Es kann vorteilhaft sein, wenn die erfindungsgemäße Siloxanverbindung eine mittlere Struktur aufweist, bei der der Index o in Formel I einen Wert von 1 bis 5 aufweist. Ebenso kann es vorteilhaft sein, wenn die erfindungsgemäße Siloxanverbindung eine mittlere Struktur aufweist, bei der der Index n in Formel I einen Wert von 5 bis 90 aufweist. Ebenso kann es vorteilhaft sein, wenn die erfindungsgemäße Siloxanverbindung eine mittlere Struktur aufweist, bei der der Index m in Formel I einen Wert von 0 bis 10 aufweist. Außerdem kann es vorteilhaft sein, wenn die erfindungsgemäße Siloxanverbindung eine mittlere Struktur aufweist, bei der der Index q in Formel II einen Wert von 0 bis 8 aufweist. Es kann besonders vorteilhaft sein, wenn die erfindungsgemäße Siloxanverbindung eine mittlere Struktur aufweist, bei der der Index o in Formel I einen Wert von 1 bis 5, der Index n in Formel I einen Wert von 5 bis 100, der Index m in Formel I einen Wert von 0 bis 10 und der Index q in Formel II einen Wert von 0 bis 8 aufweist. Verbindungen, die Siloxaneinheiten im Bereich der bevorzugten Anzahl an Einheiten aufweisen, haben den Vorteil, dass sie ein besonders gutes Penetrationsverhalten bei gleichzeitig gutem Abperleffekt aufweisen.

Es kann vorteilhaft sein, wenn alle Reste R⁵ in der erfindungsgemäßen Siloxanverbindung gemäß Formel I eine Methoxy- und/oder Ethoxygruppe sind. Dies hat den Vorteil, dass bei der Imprägnierung eine gute Anbindung der Siloxanverbindungen an den zu imprägnierenden Untergrund erreicht wird.

Steht bei der Verwendung der erfindungsgemäßen Siloxan-verbindungen eine möglichst geringe Abspaltung von flüchtigen organischen Verbindungen, (geringer VOC-Wert) im Vordergrund, so kann es vorteilhaft sein, wenn die erfindungsgemäßen Siloxanverbindungen im Mittel einen Anteil an Methanol- und/oder Ethanolresten von ≤ 10 Massen-%, vorzugsweise von 5 bis 10 Massen-% bezogen auf die mittlere Masse der Siloxanverbindungen aufweisen. Durch den Einsatz von erfindungsgemäßen Siloxanverbindungen mit den genannten bevorzugten Anteilen an Methanol-/EthanolResten wird bei ausreichender bis guter Anbindung der Siloxanverbindungen an den zu imprägnierenden Untergrund gleichzeitig eine möglichst geringe Belastung mit freiwerdenden flüchtigen organischen Verbindungen erreicht.

Die erfindungsgemäßen organomodifizierten Siloxanverbindungen können z. B. zur Herstellung von wässrigen Zubereitungen zur Imprägnierung anorganischer oder organischer Substrate, insbesondere zur Herstellung von wässrigen Zubereitungen zur wasserabweisenden Imprägnierung poröser mineralischer Baustoffe verwendet werden. Zur Imprägnierung können z. B. die nachfolgend beschriebenen, erfindungsgemäßen Zubereitungen eingesetzt werden.

Die erfindungsgemäßen wässrigen Zubereitungen, insbesondere zur Imprägnierung anorganischer oder organischer Substrate zeichnen sich dadurch aus, dass sie
a) 10 bis 80 Massen-Teile von Verbindungen gemäß einem der Ansprüche 1 bis 8,
b) 0,5 bis 10 Massen-Teile eines Emulgators oder Emulgatorgemisches sowie
c) Wasser
aufweisen.

Als weiteren Bestandteil können die erfindungsgemäßen wässrigen Zusammensetzungen von 0 bis 0,5 Massen-Teile Konservierungsmittel aufweisen. In bevorzugten wässrigen Zusammensetzungen beträgt der Anteil an Wasser 10 bis 89,5 Massen-Teile, vorzugsweise 40 bis 60 Massen-Teile.

Ganz besonders bevorzugte wässrige Zubereitungen zeichnen sich dadurch aus, dass sie
a) 10 bis 80 Massen-% von Verbindungen gemäß einem der Ansprüche 1 bis 8,
b) 0,5 bis 10 Massen-Teile eines Emulgators oder Emulgatorgemisches,
c) 10 bis 89,5 Massen-% Wasser und gegebenenfalls
d) 0 bis 0,5 Massen-% Konservierungsmittel
enthalten.

Als Emulgatoren können in den erfindungsgemäßen Zusammensetzungen alle bekannten Emulgatoren vorhanden sein. Vorzugsweise enthalten die wässrigen Zubereitungen als Emulgatoren eine oder mehrere Verbindungen aus der Gruppe der nichtionogenen Emulgatoren, wie z. B. Anlagerungsprodukte von Alkylenoxiden, vorzugsweise Ethylenoxid, an Verbindungen mit aktivem Wasserstoff, wie Fettalkohole, Alkylphenole, wie Octylphenol, Nonylphenol oder Dodecylphenol. Der Gehalt an Oxyethyleneinheiten sollte dabei bevorzugt so groß sein, dass der HLB-Wert der Emulgatoren 6 bis 20, insbesondere 10 bis 18, beträgt.

Die wässrigen Zubereitungen können direkt verwendet werden oder durch einfaches Verdünnen mit Wasser auf die gewünschten Anwendungskonzentrationen eingestellt werden. Diese sind abhängig von der Art der zu hydrophobierenden Baustoffe, insbesondere von deren Porosität bzw. deren Saugfähigkeit.

Besonders bevorzugt werden wässrige Zubereitungen eingesetzt, die eine Konzentration von erfindungsgemäßen Verbindungen der Formel I von 5 bis 20 Massen-%, bevorzugt 10 bis 15 Massen-% enthalten.

Mit den erfindungsgemäßen Verbindungen, insbesondere den wässrigen Zubereitungen und/oder den auf Anwendungskonzentration verdünnten Formulierungen können prinzipiell alle anorganischen oder organischen Substrate imprägniert, d.h. hydrophobiert werden.

Erfindungsgemäß bevorzugt zu behandelnde Substrate sind mineralische oder holzhaltige Werkstoffe und Fertigteile sowie Erzeugnisse daraus, wie beispielsweise Steine, Platten, Fliesen, Mörtel-, Betonmassen oder Isoliermaterialien für Wärme- oder Schallisolierung.

Prinzipiell können alle im Stand der Technik bekannten Konservierungsmittel eingesetzt werden. Erfindungsgemäß bevorzugt werden Produkte der Gruppe: Kombination von Heterocyclen und Methylol-Derivaten (beispielsweise N-Methylolchloracetamid, 5-Chlor-2-methyl-2-hisothiazol-3-on) oder Gemische aus Halbacetalen mit ungefährlichen Beimengungen (beispielsweise [1,2-Ethanediyl-bis-(oxy)]-bis-methanol), eingesetzt.

Die Herstellung der erfindungsgemäßen Emulsion kann auf bekannte Weise erfolgen. Vorzugsweise erfolgt die Herstellung der erfindungsgemäßen Emulsionen in der Weise, dass die Bestandteile a), b) und gegebenenfalls d) getrennt emulgiert werden oder eine Mischung der Bestandteile gemeinsam emulgiert werden.

Bevorzugt wird der Emulgator bzw. die Emulgatoren zu der zu emulgierenden Komponente (oder zu deren Gemisch) gegeben und das emulgatorhaltige Gemisch gegebenenfalls erwärmt. Zu dieser Mischung wird dann unter gutem Rühren das Wasser c) zugegeben. Die entstehende oder entstandene Emulsion kann mittels geeigneten Rührvorrichtungen, die vorzugsweise nach dem Rotor/Stator-Prinzip arbeiten, homogenisiert werden. Es können auch Kolloidmühlen zur Verminderung der Teilchengröße der emulgierten Phase verwendet werden.

Die folgenden Beispiele sollen die vorliegende Erfindung näher erläutern, ohne den Schutzbereich einzuschränken, der sich aus der Beschreibung und den Patentansprüchen ergibt.

### Beispiele:

Im Folgenden werden Abkürzungen mit den nachfolgend genannten Bedeutungen verwendet:
M = -O_{1/2}-Si-(CH₃)₃,
M'= -O_{1/2}-Si-(CH₃)₂H,
D = -Si(CH₃)₂O_{2/2}-,
D'= -Si(H)(CH₃)O_{2/2}-,
N = Gesamtkettenlänge der Si-Kette (Mittlere Anzahl an Si-Atome, die durch Si-O-Si-Bindungen verknüpft sind, pro Molekül).

Die in den Beispielen eingesetzten SiH-Siloxane wurden, wie in "Silicones Chemistry and Technology" erschienen beim Vulkan-Verlag, Essen beschrieben, durch Equilibrierung hergestellt. Dabei wurden für die Herstellung der in den Beispielen eingesetzten SiH-Siloxane Mischungen equilibriert, die die in Tabelle 1 angegebenen Zusammensetzungen aufwiesen:

**Tabelle 1:**

| Zusammensetzungen der in der Equilibrierung eingesetzten Gemische (Angaben in Massen-%) | | | |
|---|---|---|---|
| | SiH-Siloxan der Beispiele 1 und 2 in % | SiH-Siloxan des Beispiels 3 in % | SiH-Siloxan des Beispiels 4 in % |
| M' -D₈-M' | 0 | 0 | 0 |
| M-D' ₄₈-M | 16 | 22,3 | 9,2 |
| Cyclo-D₄ | 76,7 | 67,5 | 89,1 |
| M-M | 7,3 | 10,2 | 1,7 |

### Beispiel 1:

Herstellung einer organomodifizierten Siloxanverbindung Umsetzung eines mittelständigen SiH-Siloxans (N = 27,5, M-D_{20,5}-D'₅-M) mit iso-Butylmethacrylat (i-BMA, Degussa GmbH), 1-Hexadecen (Gulftene 16, Chevron) und Vinyltriethoxysilan (Dynasilan^{®} VTEO, Degussa GmbH) unter Verwendung eines Pt-haltigen Karstedt-Katalysators (Heraeus).

In einer Apparatur, bestehend aus einem 500 ml Dreihalskolben, Thermometer, Rührer und Tropftrichter werden 130 g des SiH-Siloxans, 17 g iso-Butylmethacrylat, 25 g 1-Hexadecen und Karstedt-Katalysator (10 ppm Pt bezogen auf Ansatz) vorgelegt und auf 80 °C erhitzt. Die auftretende Exothermie führt zu einem Temperaturanstieg auf ca. 103 °C. Nach 3 h werden 28 g Vinyltriethoxysilan innerhalb von 3 h zugetropft, wobei die Temperatur 110 °C nicht übersteigen darf. Nach beendeter Zugabe wird noch 1 h bei 110 °C nachreagiert. Nach der Abdestillation der flüchtigen Verbindungen und einer Filtration wird eine klare, leicht gelbliche Flüssigkeit erhalten, die ein Gemisch von Siloxanen enthält, deren mittlere Molekülstruktur der Formel (Ia) entspricht.

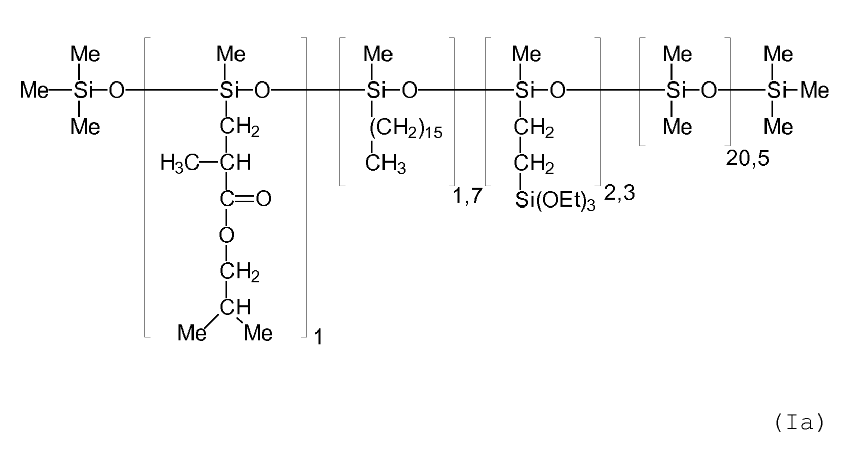

### Beispiel 2:

Herstellung einer organomodifizierten Siloxanverbindung Umsetzung eines mittelständigen SiH-Siloxans (N = 27,5, M-D_{20,5}-D'₅-M) mit 1-Hexadecen (Gulftene 16, Chevron), Undecylensäuremethylester (Methylundecylenoat ME U11, Impaq) und Vinyltriethoxysilan (Dynasilan^{®} VTEO, Degussa GmbH) unter Verwendung eines Pt-haltigen Katalysators.

In einer wie in Beispiel 1 verwendeten Apparatur wurden 264 g des SiH-Siloxans, 52,5 g 1-Hexadecen, 26 g Undecylensäuremethylester und Karstedt-Katalysator (10 ppm Pt bezogen auf Ansatz) vorgelegt und auf 80 °C erhitzt. Die auftretende Exothermie führte zu einem Temperaturanstieg auf ca. 110 °C. Nach 3 h wurden 71 g Dynasilan^{®} VTEO innerhalb von 3 h zugetropft, wobei die Temperatur 110 °C nicht übersteigen durfte. Nach beendeter Zugabe wurde noch 1 h bei 110 °C nachreagiert.

Nach der Abdestillation der flüchtigen Verbindungen und einer Filtration wurde eine klare, leicht gelbliche Flüssigkeit erhalten, die ein Gemisch von Siloxanen enthielt, deren mittlere Molekülstruktur der Formel (Ib) entspricht. Die Bestimmung der Molekülstruktur erfolgte durch NMR und GPC.

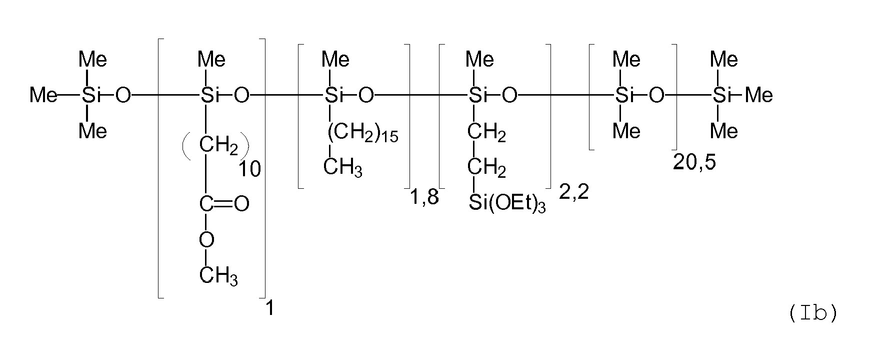

### Beispiel 3:

Herstellung einer organomodifizierten Siloxanverbindung Umsetzung eines mittelständigen SiH-Siloxans (N = 20, M-D₁₃-D'₅-M) mit 1-Hexadecen (Gulftene 16, Chevron), Undecylensäuremethylester (Methylundecylenoat ME U11, Impaq) und Vinyltrimethoxysilan (Dynasilan^{®} VTMO, Degussa GmbH) unter Verwendung eines Pt-haltigen Katalysators.

In einer wie in Beispiel 1 beschriebenen Apparatur wurden 246 g des SiH-Siloxans, 61 g 1-Hexadecen, 34 g Undecylensäuremethylester und Karstedt-Katalysator (10 ppm Pt bezogen auf Ansatz) vorgelegt und auf 80 °C erhitzt. Die auftretende Exothermie führte zu einem Temperaturanstieg auf ca. 110 °C. Nach 3 h wurden 79 g Dynasilan^{®} VTMO innerhalb von 3 h zugetropft, wobei die Temperatur 110 °C nicht übersteigen durfte. Nach beendeter Zugabe wurde noch 2 h bei 110 °C nachreagiert.

Nach der Abdestillation der flüchtigen Verbindungen und einer Filtration wurde eine klare, farblose Flüssigkeit erhalten, die ein Gemisch von Siloxanen enthielt, deren mittlere Molekülstruktur der Formel (Ic) entspricht. Die Bestimmung der mittleren Molekülstruktur erfolgte wie in Beispiel 2 beschrieben.

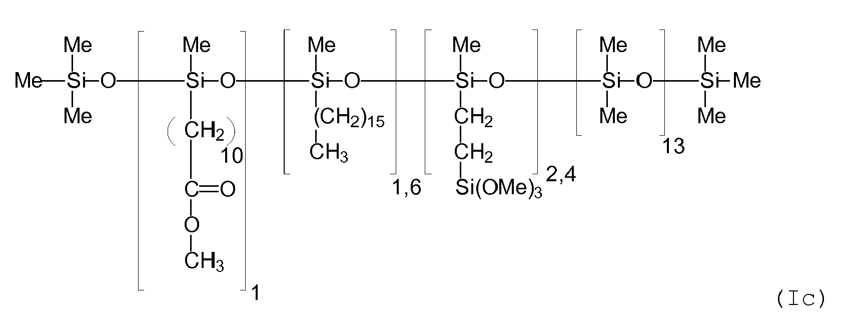

### Beispiel 4:

Herstellung einer organomodifizierten Siloxanverbindung Umsetzung eines mittelständigen SiH-Siloxans (N = 100, M-D_{87,5}-D'_{10,5}-M) mit Undecylensäuremethylester (Methylundecylenoat ME U11, Impaq) Methacrylsäuremethylester (MMA, Degussa GmbH) und Vinyltriethoxysilan (Dynasilan^{®} VTEO, Degussa GmbH) unter Verwendung eines Pt-haltigen Katalysators.

In einer wie in Beispiel 1 verwendeten Apparatur werden 160 g des SiH-Siloxans, 9 g Undecylensäuremethylester, 4,5 g Methacrylsäuremethylester und Karstedt-Katalysator (10 ppm Pt bezogen auf Ansatz) vorgelegt und auf 80 °C erhitzt. Die auftretende Exothermie führt zu einem Temperaturanstieg auf ca. 100 °C. Anschließend werden 35 g Vinyltriethoxysilan innerhalb von 1 h zugetropft, wobei die Temperatur 110 °C nicht übersteigen darf. Nach beendeter Zugabe wird noch 2 h bei 110 °C nachreagiert. Nach der Abdestillation der flüchtigen Verbindungen und einer Filtration erhält man eine klare, farblose Flüssigkeit.

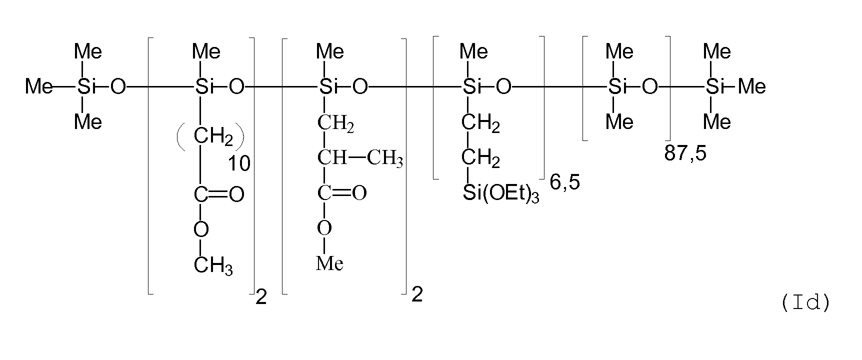

### Beispiel 5:

### Herstellung der Emulsionen für die anwendungstechnische Ausprüfung

19 g eines Emulgatorgemisches bestehend aus einem ethoxylierten Triglycerid mit einem HLB-Wert von 18 und einem ethoxylierten Fettalkohol mit einem HLB-Wert von 11 im Massenverhältnis von 6:4 wurden in 479 g Wasser unter Rühren mit einer Dissolverscheibe gelöst. Zu einer solchen Lösung wurde zum einen (Beispiel 5a) die organomodifizierte Siloxanverbindung aus Beispiel 2 und zum anderen (Beispiel 5b) die organomodifizierte Siloxanverbindung aus Beispiel 3 gegeben. Es wurde jeweils soviel organomodifizierte Siloxanverbindung zugegeben, dass ein Gemisch erhalten wurde, welches 50 Massen-% an Siloxanverbindung aufweist. Die erhaltenen Gemische wurden gerührt und mittels einer Emulgiermaschine (Spalthomogenisator) zu einer stabilen Emulsion verarbeitet.

### Beispiel 6:

### Anwendungstechnische Prüfung:

Zur anwendungstechnischen Prüfung wurde der Abperleffekt beurteilt, die Wasseraufnahme in Anlehnung an DIN 52103 bestimmt und die Eindringtiefe an fünf imprägnierten Kalksandsteinen bestimmt.

Die in Beispiel 5 hergestellten Formulierungen wurden gemäß nachfolgender Testprozedur geprüft. Die Ergebnisse der anwendungstechnischen Prüfung der Produktmuster sind in den Tabellen 2 bis 4 aufgelistet.

### Eingesetzte Materialien und Reagenzien:

Prüfkörper: Kalksandsteine (Quarzverblender-Riemchen, bruchrauh, bezogen bei der Firma Traxel Ziegel, Dortmund), Vorklinker (Terca^{®}-Kijwaard Handformverblender 5543, bezogen bei der Firma Traxel Ziegel, Dortmund) und Beton B35.
Die Steine wurden auf folgendes Format geschnitten: 20 mm x 70 mm x 55 mm
Bautenschutzemulsion (50 Massen-%ig) aus Beispiel 5: 100 g,
Leitungswasser: 400 g,
Laborwaage (0,1 g - Anzeige),
Tauchbehälter mit Kunststoffgitter
(130 mm x 90 mm x 90 mm; B x H x T),
Wasserbad mit Kunststoffgitter,
Tiegelzange,
Stoppuhr.

### Beispiel 6a:

### Reinigen und klimatisieren der Prüfkörper:

Die geschnittenen Prüfkörper wurden 24 Stunden bei Raumtemperatur gewässert und mit Wasser und einer Bürste solange gesäubert, bis sämtlicher Staub entfernt war. Anschließend wurden die gereinigten Prüfkörper im Trockenschrank bei ca. 105 °C/24 Stunden lang getrocknet und dann bei Raumtemperatur (ca. 23 °C) in einer Klimakammer bei einer Luftfeuchtigkeit von 50 % relativer Luftfeuchtigkeit bis zur Gewichtskonstanz gelagert.

### Beispiel 6b:

### Imprägnieren der Steine:

Die gereinigten und klimatisierten Prüfkörper wurden eine Minute lang in die anwendungsfertige Lösung (enthaltend 10 Massen-% der Verbindungen der allgemeinen Formel (I)) getaucht. Die dabei überstehende Flüssigkeitssäule sollte ca. 10 bis 15 mm betragen. Die getränkten Steine wurden mit der Tiegelzange aus dem Bad genommen und bei Raumtemperatur auf einem Gitter 7 Tage lang abgelüftet.

### Beispiel 6c:

### Bestimmung des Abperleffektes:

Zur Bestimmung des Abperleffektes wurde nach einem Tag und nach 7 Tagen und ggf. nach 14 Tagen nach der Tränkung 0,5 ml destilliertes Wasser mit Hilfe einer Pipette auf die Steinoberfläche aufgelegt. Der Auslauf der Pipette sollte dabei die Oberfläche leicht berühren, damit der Tropfen nicht seitlich abläuft. Nach 10 Minuten wurde der Wassertropfen abgeschüttelt und anschließend erfolgte die Beurteilung des Abperleffektes. Die Güte des Abperleffektes wurde anhand der nachstehend aufgeführten Kriterien beurteilt. Der Abperleffekt wurde von allen Prüfkörpern bestimmt und anschließend der Mittelwert gebildet.

### Beurteilungskriterien des Abperleffekts:

0 Der Wassertropfen kann nicht auf die Steinoberfläche aufgelegt werden.
1 Der Wassertropfen ist nicht aufgesogen; keine Benetzung der Oberfläche durch den Tropfen.
2 Der Wassertropfen ist nicht aufgesogen; ca. die Hälfte der Steinoberfläche unter dem Wassertropfen ist benetzt.
3 Der Wassertropfen ist nicht aufgesogen; die Steinoberfläche unter dem Wassertropfen ist voll benetzt.
4 Weniger als 10 % des Wassertropfens ist aufgesogen; Dunkelfärbung der Steinoberfläche unter dem Wassertropfen.
5 50 % des Wassertropfens ist aufgesogen.
6 Der Wassertropfen ist vollständig aufgesogen.

Ein Produktmuster weist einen guten Abperleffekt auf, wenn dieser nach 7 Tagen mindestens noch der Note 3 entspricht.

### Beispiel 6d:

### Bestimmung der Wasseraufnahme:

Die Bestimmung der Wasseraufnahme erfolgt erst, nachdem die Prüfkörper so lange gelagert worden waren, dass sich ein Abperleffekt von ≤ 4 einstellte. Nach 7 Tagen (Beton) bzw. 14 Tagen (Kalksandstein und Klinker) Lagerung auf einem Gitter bei Raumtemperatur wurden die Prüfkörper zur Bestimmung der Masse M₁ gewogen und anschließend in ein Wasserbad gegeben. Das dafür vorgesehene Bad wurde mit einem Kunststoffgitter ausgelegt. Die Wassersäule über dem Stein wurde auf 50 mm eingestellt. Nach 24 h wurden die Steine aus dem Wasserbad genommen. Anhaftendes Oberflächenwasser wurde mit Putzpapier entfernt. Anschließend wurde der Prüfköper zur Bestimmung der Masse M₂ gewogen. Es wird immer ein Blindwert mitbestimmt.

Berechnungsformel für die Wasseraufnahme (W_{A})

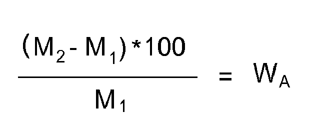

Das Ergebnis wird in Massen-% angegeben. Die Reduzierung der Wasseraufnahme nach 24 Stunden, sollte mindestens 70 % bezogen auf den Blindwert sein.

### Beispiel 6e:

### Bestimmung der Eindringtiefe:

Nach der Bestimmung der Wasseraufnahme wurden die Prüfkörper über Nacht bei 105 °C getrocknet und anschließend mit einem Hammer gespalten. Die Bruchflächen wurden mit Wasser benetzt. Die nicht imprägnierten Stellen erscheinen dunkel, während die imprägnierten hydrophoben Zonen nicht benetzt werden und hell erscheinen. Die Eindringtiefe wird durch Ausmessen der hell erscheinenden Zonen bestimmt und in mm angegeben. Ist an einem Prüfkörper eine stark unterschiedliche Eindringtiefe erkennbar, so ist das arithmetische Mittel zu bilden.

**Tabelle 2:**

| Ergebnisse der anwendungstechnischen Prüfung der Beton B-35-Probe | | | |
|---|---|---|---|
| Bautenschutzemulsion erhalten aus Emulsion gemäß | Abperleffekt [0 = gut bis 6 = schlecht] | Eindringtiefe [mm] | Wasseraufnahme nach Druckwasser-Lagerung [%] |
| Beispiel 5a | 3 | 3,3 | 1,1 (Reduzierung 80 %) |
| Beispiel 5b | 3 | 2,3 | 1, 0 (Reduzierung 82 %) |
| Blindwert | 6 | - | 5,8 |

Druckwasser-Lagerung bedeutet dabei eine Lagerung unter einer Wassersäule von 50 mm

**Tabelle 3:**

| Ergebnisse der anwendungstechnischen Prüfung der Kalksandstein-Probe | | | |
|---|---|---|---|
| Bautenschutzemulsion erhalten aus Emulsion gemäß | Abperleffekt [0 = gut bis 6 = schlecht] | Eindringtiefe [mm] | Wasseraufnahme nach Druckwasser Lagerung [%] |
| Beispiel 5a | 2 | 3,5 | 1,2 (Reduzierung 92 %) |
| Beispiel 5b | 1 | 3,2 | 1,2 (Reduzierung 92 %) |
| Blindwert | 6 | - | 15,4 |

**Tabelle 4:**

| Ergebnisse der anwendungstechnischen Prüfung der Terca^{®}-Klinker-Probe | | | |
|---|---|---|---|
| Bautenschutzemulsion erhalten aus Emulsion gemäß | Abperleffekt [0 = gut bis 6 = schlecht] | Eindringtiefe [mm] | Wasseraufnahme nach Druckwasser Lagerung [%] |
| Beispiel 5a | 2,7 | > 10 | 1,1 (Reduzierung 92 %) |
| Beispiel 5b | 2 | > 10 | 1, 3 (Reduzierung 90 %) |
| Blindwert | 6 | - | 13,5 |

Wie den Tabellen 2 bis 4 entnommen werden kann, wird durch die Behandlung mit den erfindungsgemäßen organomodifizierten Siloxan-Verbindungen ein sehr guter Abperleffekt, eine gute Eindingtiefe und eine geringe Wasseraufnahme erzielt. Es konnte somit gezeigt werden, dass sich die erfindungsgemäßen organomodifizierten Siloxan-Verbindungen hervorragend zur Herstellung von Zubereitungen für die wasserabweisende Imprägnierung von Materialien eignen.

## Patentansprüche

1. Organomodifizierte Siloxanverbindungen der allgemeinen Formel (I), 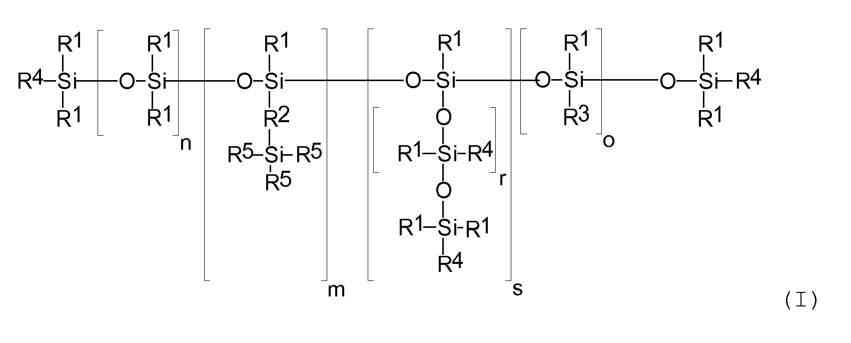 mit
R¹ gleiche oder verschiedene Reste, ausgewählt aus der Gruppe der linearen oder verzweigten, gesättigten oder ein- bzw. mehrfach ungesättigten Alkyl-, Aryl-, Alkylaryl-, Arylalkyl- oder Halogenalkylgruppen mit 1 bis 20 Kohlenstoffatomen,
R² gleiche oder verschiedene organische Reste mit 1 bis 20 C-Atomen, die gegebenenfalls Heteroatome enthalten,
R³ Carbonsäureester-funktionelle organische Reste wie in der Formel (II) dargestellt, 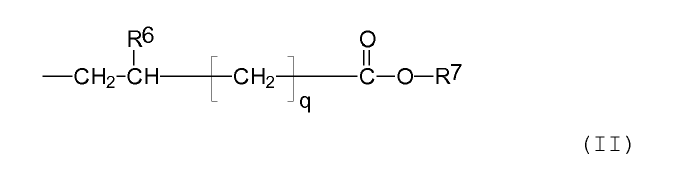 mit
R⁶ gleiche oder verschiedene lineare oder verzweigte, gesättigte oder ein- bzw. mehrfach ungesättigte Alkyl-, Aryl-, Alkylaryl- oder Arylalkylreste mit 1 bis 20 Kohlenstoffatomen
R⁷ gleiche oder verschiedene lineare oder verzweigte, gesättigte oder ein- bzw. mehrfach ungesättigte Alkyl-, Aryl-, Alkylaryl- oder Arylalkylreste mit 1 bis 20 Kohlenstoffatomen
und
q 0 bis 11,
R⁴ R⁵ unabhängig voneinander R¹, -R²-Si(R⁵)₃, oder R³, gleiche oder verschiedene gegebenenfalls ungesättigte Alkyl-, Alkoxy-, Aryl- oder Aryloxyreste mit 1 bis 20 Kohlenstoffatomen, mit der Maßgabe, dass R⁵ mindestens einmal eine Alkoxygruppe ist,
n 1 bis 200,
m 0 bis 20, mit der Maßgabe, dass m nur 0 ist wenn R⁴ der Rest -R²-Si(R⁵)₃ ist und ansonsten m ≥ 1,
o 0,2 bis 20,
r 0 bis 100,
s 0 bis 5,
wobei die mit den Indizes m, n, o, r und s bezeichneten Einheiten in beliebiger Abfolge in den Verbindungen verteilt sein können.

2. Verbindungen gemäß Anspruch 1, **dadurch gekennzeichnet, dass** im Mittel ≥ 90 % der Reste R¹ Methylgruppen sind und R² ein Alkylenrest mit 1 bis 5 C-Atomen ist.

3. Verbindungen gemäß Anspruch 1 oder 2, **dadurch gekennzeichnet, dass** o einen Wert von 1 bis 5 aufweist.

4. Verbindungen nach einem der Ansprüche 1 bis 3, **dadurch gekennzeichnet, dass** alle Reste R⁵ eine Methoxy- und/oder Ethoxygruppe sind.

5. Verbindungen nach einem der Ansprüche 1 bis 4, **dadurch gekennzeichnet, dass** n einen Wert von 5 bis 100 aufweist.

6. Verbindungen nach einem der Ansprüche 1 bis 5, **dadurch gekennzeichnet, dass** q einen Wert von 0 bis 8 aufweist.

7. Verbindungen nach einem der Ansprüche 1 bis 6, **dadurch gekennzeichnet, dass** m einen Wert von 0 bis 10 aufweist.

8. Verbindungen nach einem der Ansprüche 1 bis 7, **dadurch gekennzeichnet, dass** die Verbindungen im Mittel einen Anteil an Methanol- und/oder Ethanolresten von ≤ 10 Massen-%, vorzugsweise von 5 bis 10 Massen-% bezogen auf die mittlere Masse der Siloxanverbindungen aufweisen.

9. Verwendung mindestens einer der Verbindungen der Ansprüche 1 bis 8 zur Herstellung von wässrigen Zubereitungen zur wasserabweisenden Imprägnierung anorganischer oder organischer Substrate.

10. Verwendung mindestens einer der Verbindungen der Ansprüche 1 bis 8 zur Herstellung von wässrigen Zubereitungen zur wasserabweisenden Imprägnierung poröser mineralischer Baustoffe.

11. Wässrige Zubereitungen zur wasserabweisenden Imprägnierung anorganischer oder organischer Substrate enthaltend
a) 10 bis 80 Massen-Teile von Verbindungen gemäß einem der Ansprüche 1 bis 8,
b) 0,5 bis 10 Massen-Teile eines Emulgators oder Emulgatorgemisches sowie
c) Wasser.

12. Wässrige Zubereitung gemäß Anspruch 11, **dadurch gekennzeichnet, dass** sie von 0 bis 0,5 Massen-Teile Konservierungsmittel aufweist.

13. Wässrige Zubereitungen gemäß Anspruch 11 oder 12 **dadurch gekennzeichnet, dass** der Anteil an Wasser 10 bis 89,5 Massen-Teile beträgt.

14. Wässrige Zubereitungen gemäß einem der Ansprüche 11 bis 13, **dadurch gekennzeichnet, dass** sie
a) 10 bis 80 Massen-% von Verbindungen gemäß einem der Ansprüche 1 bis 8,
b) 0,5 bis 10 Massen-% eines Emulgators oder Emulgatorgemisches,
c) 10 bis 89,5 Massen-% Wasser und gegebenenfalls
d) 0 bis 0,5 Massen-% Konservierungsmittel, enthalten.
